# EUROPÄISCHE PATENTSCHRIFT

(11) **EP 2 441 851 B1**
(45) Veröffentlichungstag und Bekanntmachung des Hinweises auf die Patenterteilung: **08.01.2020**
(21) Anmeldenummer: 11155713.8
(22) Anmeldetag: 23.02.2011
(51) Int. Cl.: B62D 25/04, C21D 1/20, C21D 8/00, C22C 1/02, B62D 25/08, C21D 1/673, C21D 8/02, C21D 8/04, C22C 38/02, C22C 38/04, C22C 38/06, C22C 38/14, C22C 38/32

(54) **Querträger sowie Verfahren zur Herstellung eines warmumgeformten und pressgehärteten Querträgers**
Cross-member and method for producing a thermoformed and press-hardened cross-member
Traverse et procédé de fabrication d'une traverse déformée à chaud et durcie à la presse

(30) Priorität: 15.10.2010 DE 102010048209
(43) Veröffentlichungstag der Anmeldung: 18.04.2012
(73) Patentinhaber: Benteler Automobiltechnik GmbH, 33102 Paderborn (DE)
(72) Erfinder: Zimmermann, Andreas, 33659 Bielefeld (DE); Dingemans, Jan, 33102 Paderborn (DE); Pellmann, Markus, 48336 Sassenberg (DE); Böke, Johannes, Dr., 32825 Blomberg (DE)
(74) Vertreter: Ksoll, Peter

(56) Entgegenhaltungen:
- WO-A1-2010/076247
- DE-B3-102007 057 855
- DE-C1- 10 208 216
- TRÖSTER T ET AL: "Innovative Warmumformung", NEUERE ENTWICKLUNGEN IN DER BLECHUMFORMUNG: VORTRAGSTEXTE ZUR VERANSTALTUNG INTERNATIONALE KONFERENZ NEUERE ENTWICKLUNGEN IN DER BLECHUMFORMUNG IN FELLBACH (BEI STUTTGART) AM 11. UND 12. MAI 2004,, 12. Mai 2004 (2004-05-12), Seiten 51-66, XP009130353, ISBN: 978-3-88355-331-3
- Thomas Ausmann: "Hot Stamp Technologies", , 15. September 2010 (2010-09-15), XP002668592, Gefunden im Internet: URL:http://us.aptgroup.com/19946/40358/Ben telerAutomotive.pdf [gefunden am 2012-02-02]
- HEIN PHILIPP ET AL: "Status and innovation trends in hot stamping of USIBOR 1500 P", STEEL RESEARCH INTERNATIONAL, VERLAG STAHLEISEN GMBH., DUSSELDORF, DE, Bd. 79, Nr. 2, 1. Februar 2008 (2008-02-01), Seiten 85-91, XP009101799, ISSN: 1611-3683

## Beschreibung

Die vorliegende Erfindung betrifft einen Querträger, hergestellt durch Warmumformen und Presshärten, gemäß den Merkmalen von Patentanspruch 1. Die vorliegende Erfindung betrifft weiterhin ein Verfahren zur Herstellung eines Querträgers gemäß den Merkmalen im Patentanspruch 18.

Im Kraftfahrzeugbau steigt aufgrund gesetzlicher und herstellerspezifischer Vorgaben das Anforderungsprofil an die Fahrzeugsicherheit. Gleichzeitig sind die Kraftfahrzeughersteller bestrebt, die Kraftfahrzeugkarosserien im Zuge einer Minimierung des Kraftstoffverbrauchs sowie des CO2-Ausstoßes im Eigengewicht zu senken. Dies stellt eine Diskrepanz zwischen niedrigem Eigengewicht sowie hoher Biegungs- und Torsionssteifigkeit und hoher Crashsicherheit dar.

Ein Weg ist beispielsweise der Einsatz von Leichtmetallwerkstoffen, insbesondere von Aluminiumlegierungen, oder aber Karosserien in Hybridbauweise, beispielsweise aus metallischen Legierungen sowie Faserverbundwerkstoffen oder aber Kunststoffen. Beide zuvor genannten Varianten bedingen jedoch jeweils hohe Materialkosten, was wiederum Produktionskosten gerade von Volumenmodellen im Kraftfahrzeugbau hochtreibt.

Nach wie vor ist jedoch eine metallische Legierung, insbesondere Stahlwerkstoff, der bevorzugte Werkstoff für den Karosseriebau, insbesondere den Rohkarosseriebau. Durch konsequente Weiterentwicklung gilt der Stahlwerkstoff heutzutage weiterhin als Hightech Material, welcher durch verschiedenste Verfahrensmöglichkeiten einen guten Kompromiss zwischen günstiger Produzierbarkeit, guter Crashsicherheit und Langlebigkeit bildet.

Aus der DE 10 2005 054 847 B3 sind beispielsweise warmumgeformte und pressgehärtete Bauteile bekannt, die nach der Entnahme aus der Form und dem Einstellen hochfester mechanischer Eigenschaften im Stahl einer gezielten Wärmebehandlung unterzogen werden. Insbesondere bei Struktur und/oder Sicherheitsbauteilen, die im Crashfall axial belastet werden, soll ein nach der vorgenannten Art hergestelltes Bauteil einerseits hochfest sein und andererseits im Crashfalls Falten werfen, um Stoßenergie hier gezielt abbauen zu können.

Aus der Veröffentlichung "neuere Entwicklungen in der Blechumformung" der MAT Info Werkstoff-Informationsgesellschaft zeigt mehrere Verfahren zur Herstellung von Karosseriebauteilen, welche unter Ausprägung verschiedener Bereiche unterschiedlicher Duktilität dazu beitragen sollten, die Crashsicherheit in Fahrzeugen, speziell in PKWs zu erhöhen. Es wird beispielsweise eine B-Säule eines Kraftfahrzeuges angeführt, welche aus zwei Bereichen besteht, wobei der erste Bereich eine duktile und der zweite Bereich eine ultrahochfeste Ausprägung besitzt. Zusätzlich entsteht ein Übergangsbereich, welcher einen gleichmäßigen Übergang von geringen zu hohen Härtewerten ermöglicht.

Aus der DE 102 08 216 C1 ist weiterhin ein Verfahren zur Herstellung eines gehärteten metallischen Bauteils bekannt. Dieses Bauteil wird zunächst in einer Erwärmungseinrichtung auf eine Austenitisierungstemperatur erwärmt und anschließend kontrolliert abgekühlt zu werden und so in einem Endabschnitt des Bauteils eine höhere Duktilität geschaffen wird.

Auch die WO 2010/07 6247 A1 zeigt ein Verfahren zur Herstellung partiell gehärteter Bauteile aus Stahlblech. Durch dieses Verfahren ist es möglich die Härte bzw. Duktilität von insbesondere pressgehärten Bauteilen im lokal definierten Teilbereichen derart zu beeinflussen, dass es zu keiner weiteren Beeinflussung anderer Bereiche des Teilquerschnitts kommt. Dies wird dadurch ermöglicht, dass Induktoren eingesetzt werden, die die Temperatur des Bauteils während des Abkühlprozesses präzise einstellen können.

Eine Wärmbehandlung findet gemäß dem Stand der Technik üblicherweise in einem Temperaturbereich zwischen 320° C und 400° C statt und verändert die im Warmform- und Presshärteprozess eingestellten Werkstoffeigenschaften mit ihren Festigkeitswerten kaum. Gleichzeitig wird jedoch die Duktilität des Werkstoffs derart erhöht, dass im Crashfall eine gute Faltenbildung möglich ist.

Die zusätzliche Wärmenachbehandlung bedingt jedoch wiederum einen höheren Produktionskostenaufwand, da zum Serienstart hin die Werkzeugkosten erheblich höher sind.

Aufgabe der vorliegenden Erfindung ist es daher, einen Querträger zur Anordnung an einem Kraftfahrzeug sowie ein Verfahren zu dessen Herstellung zur Verfügung zu stellen, der gegenüber dem Stand der Technik geringere Herstellungskosten aufweist, bei gleichzeitiger zielgenauer Einstellung von Werkstoffeigenschaften innerhalb des Querträgers.

Die zuvor genannte Aufgabe wird erfindungsgemäß mit einem Querträger gemäß den Merkmalen von Patentanspruch 1 gelöst.

Der verfahrenstechnische Anteil der Aufgabe wird mit einem Verfahren zur Herstellung eines Querträgers gemäß den Merkmalen im Patentanspruch 18 gelöst.

Vorteilhafte Ausführungsvarianten sind Bestandteil der abhängigen Patentansprüche.

Der erfindungsgemäße Querträger wird hergestellt aus einem härtbaren Stahl durch Warmumformen und Presshärten, wobei der Querträger durch den eigentlichen Herstellungsvorgang, also nach dem Presshärten, mindestens zwei Bereiche unterschiedlicher Festigkeit aufweist. Ein Bereich erster Art weist dazu ein im Wesentlichen bainitisches Gefüge mit weniger als 30% weiteren Gefügebestandteilen auf und ein Bereich zweiter Art weist ein im Wesentlichen martensitisches Gefüge mit weniger als 30% weiteren Gefügebestandteilen auf, wobei zwischen den beiden Bereichen ein Übergangsbereich ausgebildet ist, der sich über eine Strecke von weniger als 80 mm erstreckt und der härtbare Stahl ein mehrlegierter Vergütungsstahl ist.

Bevorzugt ist der Übergangsbereich kleiner als 50 mm, besonders bevorzugt kleiner als 30 mm und insbesondere kleiner als 20 mm ausgebildet. Durch den sehr kleinen Übergangsbereich ist es im Rahmen der Erfindung möglich, das Bauteil innerhalb eines Herstellungsschrittes, nämlich dem Herstellungsverfahren an sich, derart gezielt einzustellen, dass die geforderten Crasheigenschaften, bei gleichzeitiger günstiger Produzierbarkeit unter der Berücksichtigung der auftretenden Produktionstoleranzen sicher hergestellt ist.

Vorteilig bei dem erfindungsgemäßen Querträger ist die prozesssicher und gezielt herstellbare Werkstoffeigenschaft in bestimmten Bereichen. Durch das im Wesentlichen bainitische Gefüge im Bereich erster Art sind hierdurch Bereiche mit duktilen Werkstoffeigenschaften hergestellt.

Ein erfindungsgemäßer Querträger ist bei einer Kraftfahrzeugkarosserie beispielsweise quer an der Vorder- und/oder Hinterseite angeordnet, um gezielt einen aufprallenden Gegenstand oder ein anderes Kraftfahrzeug aufzufangen. Der Querträger soll dabei möglichst den auf das Kraftfahrzeug aufprallenden Körper oder den feststehenden Körper, auf den das Kraftfahrzeug auffährt, so abfangen, dass sich der Querträger zur Energieaufnahme minimal verformt und ein gezieltes Eindringen eines Körpers in das Kraftfahrzeug selber verhindert wird.

Ein Querträger ist dazu meist über Crashboxen an ein Kraftfahrzeug gekoppelt. Die Crashboxen wiederum sind auf der Kraftfahrzeugseite beispielsweise an Längsträgern befestigt. Bei dem erfindungsgemäßen Querträger mit partiell duktileren Bereichen ist es somit möglich, dem Querträger in seinem mittleren Bereich eine hohe Steifigkeit und Festigkeit zu verleihen und gleichzeitig an den Anbindungspunkten der Crashboxen eine hohe Duktilität zu gewährleisten. Die hohe Duktilität in den Anbindungspunkten bzw. Aufnahmebereichen verhindert im Crashfall ein Abreißen des Querträgers von den Crashboxen. Weiterhin wird durch die Crashenergie in diesen Bereichen eine gezielte Faltenbildung gefördert, sodass die kinetische Energie des Aufpralls in Umformenergie umgewandelt wird. Ein ungewolltes Abreißen des Querträgers im Crashfall wird so weitestgehend vermieden.

Unter einem erfindungsgemäßen Querträger zur Anordnung an einem Kraftfahrzeug ist aber auch beispielsweise ein Querträger in der Bodengruppe oder aber ein Querträger im Dachbereich des Kraftfahrzeuges zu verstehen. Im Falle des Querträgers, der an einer Bodengruppe integriert ist, kann es sich beispielsweise um einen Sitzquerträger oder aber um einen Getriebehalter oder eine Versteifung in der Bodengruppe selber handeln. Der Sitzquerträger an sich dient wiederum zur Aufnahme von Sitzschienen, auf denen dann die Kraftfahrzeugsitze befestigt sind. Auch hier ist es von besonderer Bedeutung, dass im Crashfall die Koppelungsbereiche des Sitzquerträgers mit der Bodengruppe und auch mit den Sitzschienen eine hohe Duktilität aufweisen, sodass hier im Crashfall bei Formung der Bodengruppe ein Aus- bzw- Abreißen der Sitzquerträger und somit der Sitzschienen weitestgehend vermieden wird.

Bei einem erfindungsgemäßen Querträger erhöht sich somit insgesamt das Energieaufnahmevermögen, was wiederum das Gesamtenergieaufnahmevermögen der Kraftfahrzeugkarosserie erhöht, bei gleichzeitig hoher Steifigkeit. Gleichzeitig können in den Bereichen höherer Duktilität Materialeinsparungen aufgrund beispielsweise dünnerer Wandstärken erfolgen, was wiederum das Gesamtgewicht der Kraftfahrzeugkarosserie senkt. In der Folge wird bei einem Kraftfahrzeug, dass mit dem erfindungsgemäßen Querträger ausgestattet ist, ein hohes Maß an Energie dadurch absorbiert, dass kinetische Energie des Aufpralls in Verformungsenergie umgewandelt wird, bei zumindest gleichbleibender hoher Steifigkeit der Fahrgastzelle oder aber erhöhter Steifigkeit der Fahrgastzelle und somit der Karosserie.

Ein weiterer Vorteil eines erfindungsgemäßen Querträgers ist, dass durch Bereiche, die gezielt nach dem erfindungsgemäßen Warmumformen und Presshärten als Bereiche zweiter Art ausgebildet sind, ein ungewolltes Einknicken vermieden wird. Die hohe Härte der Bereiche zweiter Art verhindern somit das Auftreten einer in bestimmten Bereichen unerwünschten Verformung.

Ebenfalls eine Schwächung des Materials aufgrund von hoher Dauerlastschwingungen und/oder Vibrationen in Verbindung mit hoher Härte wird somit vermieden. Die restlichen Bestandteile des Querträgers, also die Bereiche zweiter Art, weisen ein im Wesentlichen martensitisches Gefüge mit besonders hohen Festigkeitswerten auf, sodass die mindestgeforderte Festigkeit und Crasheigenschaften des Bauteils hinreichend erfüllt ist.

Der erfindungsgemäß hergestellte Querträger lässt sich somit kostengünstig gegenüber mit aus dem Stand der Technik bekannten Herstellungsverfahren hergestellten Bauteilen produzieren, da lediglich ein Umform- und Presshärteprozess notwendig ist, um die wichtigsten geforderten Bauteileigenschaften einzustellen. Die Einstellung über ein im Wesentlichen martensitisches Gefüge und ein Zwischengefüge, welches im Wesentlichen durch ein bainitisches Gefüge geprägt ist, erlaubt dabei eine besonders fehlerunanfällige gezielte Einstellung der geforderten Werkstoffeigenschaften in klar definierten Bereichen des Bauteils.

Der Bereich zweiter Art, welcher ein martensititsches Gefüge als Hauptgefügebestandteil aufweist, ist erfindungsgemäß dadurch gekennzeichnet, dass das martensitische Gefüge zu mehr als 50 %, insbesondere mehr als 80 %, bevorzugt mehr als 90 % und besonders bevorzugt mehr als 95 % ausgebildet ist.

Die hohe Verwindungssteifigkeit sowie Biegesteifigkeit durch das martensitische Gefüge garantiert die hohe Härte des erfindungsgemäßen Querträgers, was beispielsweise im Falle eines Aufpralls oder Fahrzeugcrashs oder ähnlichen Crasheinwirkungen die ursprüngliche Form der Karosserie und der Fahrgastzelle bestmöglich aufrecht erhält und somit die Fahrzeuginsassen schützt.

Im Rahmen der Erfindung kann jedoch auch im Bereich zweiter Art als weiterer Gefügebestandteil Bainit vorhanden sein.

Im Rahmen der Erfindung weist der Bereich erster Art als Hauptgefügebestandteil Bainit auf, wobei weitere Gefügebestandteile mit weniger als 30 % oder insbesondere weniger als 15 % vorhanden sind. Hier kann beispielsweise ein Mischgefüge aus Bainit, mit Ferrit und/oder Perlit vorhanden sein. Gegebenenfalls kann im Rahmen der Erfindung auch Martensit als Gefügebestandteil im Bereich erster Art vorhanden sein.

Alternativ ist der Bereich erster Art dabei von dem Bereich zweiter Art zumindest teilweise umschlossen, besonders bevorzugt ist der Bereich erster Art von dem Bereich zweiter Art vollständig umschlossen. Im Bereich von Anbindungspunkten für beispielsweise Crashboxen, ist der Bereich erster Art vorzugsweise von dem Bereich zweiter Art vollständig umschlossen. Durch den erfindungsgemäßen besonders kleinen Übergangsbereich bleibt weiterhin die Steifigkeit in Bauteilrichtung erhalten, sodass im Wesentlichen keine Schwachstelle, beispielsweise in Form einer ungewollten Sollknickstelle hergestellt ist. Ebenfalls ist der Bereich erster Art jedoch derart duktil ausgebildet, dass eine Rissbildung weitestgehend vermieden wird. Das Ausreißen von Crashboxanbindungen oder aber Längsträgern oder sonstigen gekoppelten Bauteilen durch beispielsweise einen Offset Crash wird weitestgehend durch die Duktilität des Bereichs erster Art vermieden.

Hierzu ist besonders bevorzugt der Bereich erster Art punktuell ausgebildet, vorzugsweise mit einem Durchmesser von weniger als 40 mm, insbesondere weniger als 20 mm und besonders bevorzugt weniger als 10 mm.

Ebenfalls ist im Rahmen der Erfindung im Bereich erster Art ein Durchzug herstellbar. Dies bedeutet, dass die Herstellung des Durchzuges während des Umformprozesses und/oder Presshärtprozesses gleichzeitig erfolgen kann, bzw. besonders bevorzugt der Durchzug auch nach Beendigung des Presshärtvorganges herstellbar ist. Aufgrund der höheren Duktilität ergibt sich hierbei für ein Loch- oder Stanzwerkzeug ein geringerer Werkzeugverschleiß bzw. der Durchzug ist überhaupt erst ohne Rissbildung möglich.

Vorteilhaft ist im Rahmen der Erfindung vorgesehen, Randbereiche, insbesondere Aussparungen und Flansche als Bereiche erster Art auszubilden, wodurch Einrisse von der Kante ausgehend wirksam vermieden werden können. Auch Bereiche mit nach dem Presshärten erfolgender mechanischer Bearbeitung wie Umstellungen können sinnvoller Weise als Bereiche erster Art ausgeführt werden.

Im Rahmen der Erfindung kann der Bereich erster Art weiterhin als Bereich zur Herstellung von Schnittkanten vorgesehen sein. Hierbei wird zum günstigen Kaltzuschnitt nach der Warmumformung und Presshärtung, beispielsweise durch einfache Schneide- bzw. Trennverfahren, eine für das Schneide- bzw. Trennwerkzeug schonende Ausgangssituation des Werkstoffes bereitgestellt. Im Zuge von hohen Toleranzanforderungen kann die weitere Bearbeitung des Bauteils, beispielsweise durch Zuschnitt hier besonders schonend, präzise und kostengünstig hergestellt werden. Insbesondere kann auf ein teures Laserbeschneiden des sonst harten Bauteilrandes verzichtet werden. Dazu kann besonders vorteilhaft ein umlaufender, schmaler und endkontur naher Bereich zweiter Art ausgebildet werden. Gleichzeitig werden die Risiken einer verzögerten Rissbildung hervorgerufen durch lokale Spannungen im harten Gefüge deutlich verringert.

Im Rahmen der Erfindung besitzt der Bereich erster Art ein Dehnvermögen A50 zwischen 10 und 30 %, vorzugsweise zwischen 14 und 20 %. Hierdurch ist eine hinreichend hohe Festigkeit, bei gleichzeitig ausreichender Duktilität sichergestellt, sodass im Crashfall eine Rissbildung und somit ein Abreißen einzelner Kraftfahrzeugstrukturbauteile vermieden ist.

Besonders bevorzugt weist weiterhin der Bereich erster Art eine Zugfestigkeit zwischen 500 und 1000 N/mm² auf, vorzugsweise zwischen 550 und 800 N/mm². Der Bereich erster Art weist eine Streckgrenze zwischen 200 und 800 N/mm², bevorzugt zwischen 250 und 600 N/mm², besonders bevorzugt zwischen 250 und 500 N/mm², ganz besonders bevorzugt zwischen 300 und 500 N/mm².

Zwischen dem Bereich zweiter Art und dem Bereich erster Art ist vorzugsweise die Streckgrenze und/oder die Zugfestigkeit mit einem Gradienten von mehr als 100 N/mm², vorzugsweise mehr als 200 N/mm² und insbesondere mehr als 400 N/mm² pro 10 mm abnehmend oder zunehmend ausgebildet. Dies bedeutet, dass die Streckgrenze und/oder Zugfestigkeit vom Bereich erster Art pro 10 mm mehr als 100 N/mm², in Richtung des Bereichs zweiter Art zunimmt.

Vorzugsweise weist der Bereich zweiter Art eine Festigkeit von mehr als 1000 N/mm², insbesondere mehr als 1200 N/mm² und besonders bevorzugt mehr als 1400 N/mm² auf.

Das erfindungsgemäße Verfahren zur Herstellung eines warmumgeformten und pressgehärteten Querträgers, wobei der Querträger mindestens zwei Bereiche unterschiedlicher Festigkeit erhält, sieht folgende Verfahrensmerkmale vor:
- Bereitstellen einer härtbaren Blechplatine bzw. Halbzeug, welche auf mindestens Austenitisierungstemperatur erwärmt wird,
- Zwischenkühlen eines Bereiches erster Art der Blechplatine bzw. Halbzeug, wobei die Abkühlgeschwindigkeit größer der unteren kritischen Abkühlgeschwindigkeit der Bainitbildung des Werkstoffes der Blechplatine bzw. Halbzeug gewählt wird, wobei auf eine Temperatur zwischen 600 und 400°C abgekühlt wird,
- Warmformen und Presshärten der Blechplatine bzw. Halbzeug zu dem Querträger in einem Presshärtewerkzeug.

Durch das erfindungsgemäße Verfahren wird zeitgesteuert und/oder temperaturgesteuert ein Zwischenstufengefüge eingestellt. Das Zwischenstufengefüge wird insbesondere in dem Bereich erster Art der Blechplatine durch ein Zwischenkühlen eingestellt. Die Abkühlgeschwindigkeit des Zwischenkühlens wird dabei im Rahmen der Erfindung so gewählt, dass sie oberhalb der unteren kritischen Abkühlgeschwindigkeit der Bainitbildung des Werkstoffes der Blechplatine liegt. Sie ist also größer als die untere kritische Abkühlgeschwindigkeit der Bainitbildung. Insbesondere werden Bereiche gekühlt, die nach dem Presshärten weich sein sollen, d.h. sie weisen eine höhere Duktilität auf.

Im Rahmen der Erfindung ist es grundsätzlich auch möglich, das Bauteil kalt zu einem Halbzeug vorzuformen. Somit wird das Bauteil aus einer härtbaren Blechplatine zumindest partiell vorgeformt. Vorzugsweise wird dabei eine Vorformung, die beispielsweise zumindest 80 % der Endform angepasst ist, vorgenommen. An den kalten Vorformvorgang, welcher beispielsweise bei Raumtemperatur durchgeführt wird, schließt sich dann ein Erwärmen auf mindestens Austenitisierungstemperatur, also auf über AC3-Temperatur, an. Anschließend folgt dann zumindest ein partielles Zwischenkühlen eines Bereiches erster Art sowie weitere Schritte des erfindungsgemäßen Verfahrens.

Der Abkühlvorgang des Zwischenkühlens wird dabei nach dem Erwärmen der härtbaren Blechplatine auf Austenitisierungstemperatur durchgeführt, er kann jedoch im Rahmen der Erfindung vor oder während des Warmform- und Presshärteprozesses durchgeführt werden. Insbesondere wenn der Abkühlvorgang des Zwischenkühlens während des Presshärtens durchgeführt wird, sind hier in dem Pressenwerkzeug entsprechende Mittel vorzusehen, die eine entsprechende Abkühlung und auch entsprechende Abkühlgeschwindigkeiten realisieren können.

Sofern die Zwischenkühlung vor dem Warmform- und Presshärten stattfindet, so ist eine Produktionslinie mit entsprechenden Zwischentransfers der über Austenitisierungstemperatur erwärmten Blechplatine hierunter zu verstehen.

Die Abkühlung selber kann beispielsweise durch freie oder erzwungene Konvektion, Kühlwalzen, zweiseitige oder einseitige Temperierplatten mit Isoliergegenlage oder durch Beaufschlagung mit Kühlmedien wie Wasser oder durch andere entsprechende Abkühlvorrichtungen durchgeführt werden. Hierbei kann eine Abkühlung sowohl in einer fest installierten Zwischenstation als auch in einer im Produktionstakt beweglichen Kühleinheit durchgeführt werden. Vorzugsweise erfolgt hier eine Abkühlgeschwindigkeit bei der Zwischenkühlung zwischen 200 Kelvin pro Sekunde und 5 Kelvin pro Sekunde. Besonders bevorzugt ist eine Abkühlgeschwindigkeit von 50 Kelvin pro Sekunde vorzusehen. Die Abkühlung findet dabei bevorzugt unmittelbar nach der Entnahme aus dem Ofen statt. Hierdurch werden Festigkeitswerte in den ersten Bereichen zwischen 550 und 900 MPa eingestellt. Vorzugsweise werden Festigkeitswerte von im Wesentlichen 700 MPa eingestellt.

Insbesondere wird ein Bereich zweiter Art, wobei der Bereich zweiter Art jedweder Bereich der Blechplatine ist, der nicht durch den Bereich erster Art vereinnahmt wurde, oberhalb der Austenitisierungstemperatur gehalten. Dies bedeutet, dass nach dem Erwärmen der Blechplatine auf mindestens Austenitisierungstemperatur eine entsprechende Temperatur oberhalb der Austenitisierungstemperatur gehalten wird. Dies kann beispielsweise aktiv durch externe Wärmequellen geschehen, oder aber passiv durch entsprechende Isolierung. Denkbar ist aber auch die Aufrechterhaltung über der Temperatur AC1. Dadurch würde ein gewisser Festigkeitsverlust gegenüber dem Umformen aus AC3 erfolgen, der aber in den meisten Fällen unkritisch ist.

Im Falle von externen Wärmequellen kann das Halten der Temperatur in dem Bereich zweiter Art, insbesondere durch Infrarotlampen, Heizwendeln, Porenbrennern, Isolierplatten oder ähnliche externe Wärmequellen erfolgen. Ebenfalls ist es im Rahmen der Erfindung möglich, eine Temperatur deutlich oberhalb der Austenitisierungstemperatur zu wählen, so dass die Zeit, die nach Abschluss der Erwärmung auf über Austenitisierungstemperatur bis zum Beginn des Presshärtevorganges und die hierbei erfolgende Abkühlung derart aufeinander abgestimmt sind, dass bei Beginn des Presshärtevorganges der Bereich zweiter Art immer noch eine Temperatur aufweist, die mindestens oberhalb der Austenitisierungstemperatur liegt.

In einer weiteren vorteilhaften Ausführungsvariante der vorliegenden Erfindung wird die Abkühlgeschwindigkeit beim Zwischenkühlen des Bereiches erster Art so gewählt, dass ein bainitisches Gefüge erhalten wird. Es wird auf eine Temperatur zwischen 600 und 400°C abgekühlt, insbesondere auf 500°C. Bei Abkühlgeschwindigkeiten, die größer der unteren kritischen Abkühlgeschwindigkeit des jeweilig eingesetzten Werkstoffes liegen, jedoch oberhalb der Martensit-Starttemperatur stoppen, erfolgt die sogenannte Bainitbildung bei isothermen Halten der Abkühltemperatur, auch als Zwischengefüge oder aber auch Zwischenstufe bekannt.

Im Gegensatz zu den aus dem Stand der Technik bekannten Verfahren, bei denen Perlit oder Ferrit gebildet wird, wobei sich der Perlit maßgeblich durch Diffusion direkt aus dem Austenit bildet, ist in der Zwischenstufe des Bainits durch die schnellere Abkühlung die Diffusion des Kohlenstoffes im Austenit stark erschwert. Es wandeln sich dabei bei der Bainitbildung meist von Korngrenzen ausgehend, kleine Austenitbereiche in ein verzehrtes alpha-Gitter um. Da die Diffusionsgeschwindigkeit im alpha-Gitter wesentlich größer ist, als im gamma-Gitter, scheiden sich nun in diesen an Kohlenstoff übersättigten alpha-Mischkristallen kleine Zementitkörnchen aus, die feiner sind, je schneller abgekühlt wird. Hierbei entsteht eine im Wesentlichen nadelige Struktur des bainitischen Gefüges. Hierbei entsteht eine körnige Struktur der Karbide in Folge der durch zunehmende Kornfeinheit anwachsenden Härte. Bei dem bainitischen Gefüge wird weiterhin zwischen einer oberen Zwischenstufe, in der die Karbide zur größeren Einwandung vereinigt und einer unteren Zwischenstufe, in der die Karbide feinstverteilt sind, unterschieden.

In einer bevorzugten Ausführungsvariante des vorliegenden Verfahrens, wird der Bereich erster Art auf der Abkühltemperatur der Zwischenkühlung für eine vorgebbare Zeit gehalten, vorzugsweise findet das Halten der Temperatur im Wesentlichen isotherm statt. Durch diese Ausführungsvariante kann das bainitische Zwischengefüge mit den jeweils geforderten bzw. gewünschten Festigkeitswerten zeitabhängig genau eingestellt werden. Die Zwischenkühlung erfolgt bei dieser Ausführungsvariante maßgeblich auf eine Temperatur, in der sich das Werkstoffgefüge des Bereiches erster Art in Austenit umgewandelt hat oder aber erfolgt direkt in das Zwischengefüge hinein. Von dieser Abkühltemperatur aus, erfolgt eine weitere Umwandlung des Werkstoffgefüges durch isothermes Halten für einen bestimmten Zeitraum. Der Werkstoff wandelt sich dann im Falle von einem austenitischem Gefüge in ein bainitisches Gefüge. Wird der Werkstoff durch die Wahl der Abkühlgeschwindigkeit direkt in die Zwischenstufe hinein gekühlt, so ist bereits auch hier ein Mischgefüge zwischen Austenit und Bainit eingestellt. Durch das Halten auf der Abkühltemperatur, erfolgt ein Halten im reinen bainitischen Umwandlungsgefügebereich für eine bestimmte Zeit. Je länger der Bereich erster Art auf dieser Temperatur gehalten wird, umso größer wird der bainitischen Anteil des Gefüges.

In einer weiteren bevorzugten Ausführungsvariante wird der auf die Abkühltemperatur abgekühlte Zwischengefügebereich in dem Presshärtwerkzeug selber aus der bainitischen Gefügeumwandlungsstufe weiter abgeschreckt, so dass im Bereich erster Art ein Mischgefüge aus Martensit und Bainit eingestellt wird. Durch das Abschrecken des Bereiches erster Art, in dem das Gefüge eine Zwischenstufe aufweist, werden die Rest-Austenitanteile beim Presshärten zu Martensitanteilen umgewandelt. Hierdurch entsteht in den Bereichen erster Art ein Martensit-Bainit-Mischgefüge. Die Anteile des Bainits im Verhältnis zum Martensit hängen dabei wiederum von der Dauer ab, die der erste Bereich in der Zwischenstufe gehalten wird, bevor der Presshärtevorgang beginnt.

In einer besonders bevorzugten Ausführungsvariante wird der Bereich erster Art isotherm über einen bestimmten Zeitbereich derart gehalten, so dass sich der Bereich erster Art vollständig in Bainit umgewandelt hat. Hierdurch wird ein Werkstoffgefüge erreicht, dass eine höhere Festigkeit aufweist, gegenüber einem ferritisch-perlitischem Gefüge. Insbesondere wird hierdurch gezielt ein perlitisches Gefüge vermieden, wodurch eine Duktilitätsminderung erfolgen würde.

In einer besonders bevorzugten Ausführungsvariante der vorliegenden Erfindung wird die Abkühlgeschwindigkeit beim Zwischenkühlen oberhalb der oberen kritischen Abkühlgeschwindigkeit des verwendeten Werkstoffes gewählt. Hierdurch kann gezielt ein austenitischer Bereich eingestellt werden, der im Folgenden auf einem Temperaturlevel vorzugsweise isotherm über eine vorgebbare Zeit gehalten wird, so dass die Gefügeumwandlung über die Haltezeit gezielt bainitsch eingestellt wird. Je nach verwendeter Haltezeit kann hierbei dann ein teilweise bainitisches austenitisches Gefüge oder aber ein ausschließlich bainitisches Gefüge eingestellt werden. Im Falle eines bainitisch-austenitischen Gefüges, wird dieses durch den nachfolgenden Presshärtevorgang in ein bainitisch-martensitisches Gefüge umgewandelt.

Im Rahmen der Erfindung ist ein Halten auf im Wesentlichen gleicher Temperatur unterhalb der Ferrit- und Perlittemperatur, also maßgeblich unter 700°C, insbesondere unter 600°C, besonders bevorzugt unter 550° C, jedoch oberhalb einer Martensit-Starttemperatur zu verstehen. So kann es bei einem isothermen Halten über einen längeren Zeitbereich beispielsweise zu einem Abnehmen der Temperatur von 500 auf 400°C kommen, was jedoch im Rahmen der Erfindung immer noch als im Wesentlichen isotherm zu sehen ist. Besonders bevorzugt wird der Bereich erster Art isotherm in einem Zeitbereich von 1 Sekunde bis zu 80 Sekunden gehalten. Besonders bevorzugt sind 15 Sekunden als Haltezeit vorzusehen. Dies ist jedoch der jeweils eingesetzten Werkstofflegierung abhängig zu wählen.

In einer weiteren bevorzugten Ausführungsvariante des erfindungsgemäßen Verfahrens, wird die Zwischenkühlung des Bereiches erster Art in dem Presshärtewerkzeug durchgeführt, vorzugsweise durch in dem Presshärtewerkzeug angeordnete Kühlplatten. Hierdurch verringern sich die Taktzeiten und auch die Herstellungskosten. Insbesondere wird ein Kraftfahrzeugbauteil mit Bereich unterschiedlicher Festigkeit in nur zwei Werkzeugschritten hergestellt. Zunächst erfolgt ein Erwärmen in einer Ofenanlage und anschließend ein kombiniertes Zwischenkühlen und Warmumformen und Presshärten in nur einem Werkzeug.

Für die Abkühlgeschwindigkeit beim eigentlichen Presshärtevorgang wird mindestens eine Abkühlgeschwindigkeit von 25 Kelvin pro Sekunde gewählt. Besonders bevorzugt mehr als 27 Kelvin pro Sekunde. Insbesondere werden jedoch höhere Abkühlgeschwindigkeiten für den eigentlichen Presshärtevorgang gewählt. Maßgeblich erfolgt der Presshärtevorgang dann insbesondere in sowohl dem Bereich erster Art als auch in dem Bereich zweiter Art mit der gleichen Abkühlgeschwindigkeit abhängig vom lokalen Temperaturgradienten zwischen Presshärtewerkzeug und Werkstück. Aufgrund der verschiedenen Temperaturen bei Beginn des Presshärtevorganges in beiden Bereichen kann jedoch die Abkühlgeschwindigkeit von Bereich erster Art zu Bereich zweiter Art leicht divergieren.

Es wird härtbarer Stahl bei dem erfindungsgemäßen Verfahren verwendet, der als mikrolegierter Vergütungsstahl einzustufen ist. Dieser weist insbesondere folgende Legierungselemente als Massengewichtsprozentanteile auf:

| | | |
|---|---|---|
| Kohlenstoff | (C) | 0,19 bis 0,25 |
| Silizium | (Si) | 0,15 bis 0,30 |
| Mangan | (Mn) | 1,10 bis 1,40 |
| Phosphor | (P) | 0 bis 0,025 |
| Schwefel | (S) | 0 bis 0,015 |
| Chrom | (Cr) | 0 bis 0,35 |
| Molybdän | (Mo) | 0 bis 0,35 |
| Titan | (Ti) | 0,020 bis 0,050 |
| Bor | (B) | 0,002 bis 0,005 |
| Aluminium | (Al) | 0,02 bis 0,06. |

Besonders bevorzugt wird im Rahmen der Erfindung das Zwischenkühlen der Bereiche erster Art mit einem Werkzeug mit integrierten Kühlplatten durchgeführt. Die Kühlplatten haben dabei eine Eigentemperatur von bis zu 600° Celsius, die jedoch gegenüber der AC3-Temperatur von mehr als 900° Celsius kälter ist. Mittels dieser Kühlplatten kann der Bereich erster Art abgekühlt werden und dann gegebenenfalls auch isotherm über einen Zeitraum gehalten werden. Beispielsweise können solche Kühlplatten aufgrund von elektrischen Heizpatronen oder aber über eine rückseitige Brennererwärmung oder aber über Thermoöle auf die jeweils erforderliche Temperatur gebracht werden.

In einer weiteren Ausführungsvariante kann die Zwischenkühlung auch über im Wesentlichen kalte Kühlplatten erfolgen. Die Platten weisen dann eine Temperatur deutlich unterhalb von 400° C vorzugsweise zwischen -100 °C und +100 °C, besonders bevorzugt zwischen -10 °C und +25 °C auf. Eine isotherme Haltezeit ist jedoch mit kalten Kühlplatten nur bedingt durchführbar. Besonders bevorzugt werden beide Versionen von Kühlplatten, beispielsweise auch in ein Warmumformwerkzeug und Pressenwerkzeug integriert, sodass der gesamte Prozess nach der eigentlichen Ofenerwärmung in nur einem Werkzeug durchgeführt wird. Im Rahmen der Erfindung können die Kühlplatten zur Durchführung der Zwischenkühlung jedoch auch in einem extra Werkzeug untergebracht werden, sodass der Prozess von Erwärmungsofen über Zwischenkühlung zum eigentlichen Warmumform- und Presshärtwerkzeug stattfindet. Diese Ausführungsvariante hat den Vorteil, dass das separate Werkzeug im Wesentlichen als flaches Werkzeug mit im Wesentlichen ebenen Heiz- bzw. Kühlplatten gestaltet werden kann.

Weitere Vorteile, Merkmale, Eigenschaften und Aspekte der vorliegenden Erfindung ergeben sich aus der nachfolgenden schematischen Figurenbeschreibung. Diese dient dem einfachen Verständnis der Erfindung. Es zeigen:
- Figur 1: zeigt einen Flächenausschnitt eines erfindungsgemäßen Querträgers mit einem Bereich erster Art, einem Übergangsbereich und einem Bereich zweiter Art;
- Figur 2: zeigt einen erfindungsgemäßen Querträger;
- Figur 3: zeigt ein ZTU-Schaubild zur Durchführung eines erfindungsgemäßen Verfahrens;
- Figur 4: zeigt einen Querträger in Form eines Dachquerträgers und
- Figur 5: zeigt einen Querträger in Form eines Sitzquerträgers.

In den Figuren werden für gleiche oder ähnliche Bauteile dieselben Bezugszeichen verwendet, auch wenn eine wiederholte Beschreibung aus Vereinfachungsgründen entfällt.

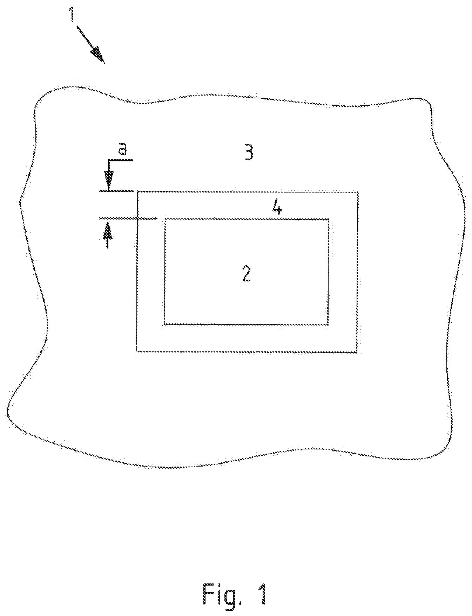

Figur 1 zeigt einen Ausschnitt eines Querträgers 1. Hierbei ist umliegend zu erkennen, dass in einem Bereich erster Art 2 ein Bereich zweiter Art 3 gemäß der vorliegenden Erfindung ausgebildet ist. Zwischen dem Bereich erster Art 2 und Bereich zweiter Art 3 ist ein Übergangsbereich 4 angeordnet. In dem Bereich erster Art 2 ist ein tendenziell duktiles Werkstoffgefüge hergestellt, in dem Bereich zweiter Art 3 ein hartes Werkstoffgefüge. Im Rahmen der vorliegenden Erfindung weist der Übergangsbereich 4 im Wesentlichen einen Breite a auf, die in Relation zu dem Bereich erster Art 2 besonders klein ausfällt.

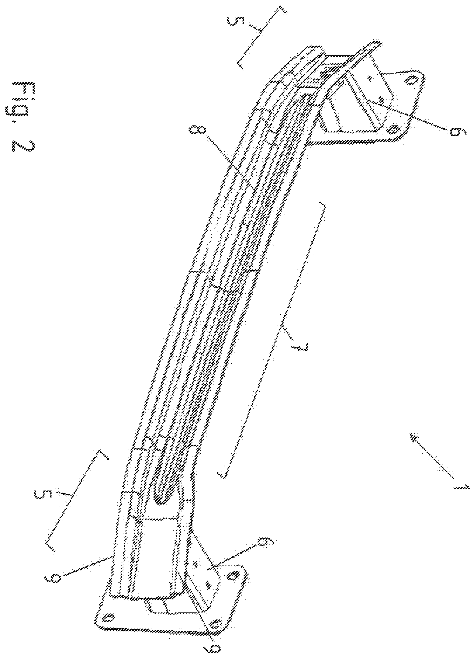

Figur 2 zeigt einen Quertäger 1 einer hier nicht näher dargestellten Kraftfahrzeugkarosserie. Der Querträger 1 weist dazu Anbindungsbereiche 5 auf, an die jeweils eine Crashbox 6 gekoppelt ist. Die Anbindungsbereiche 5 selber sind dabei gemäß dem erfindungsgemäßen Verfahren hergestellte Bereiche erster Art. Der Querträger 1 weist weiterhin einen Mittelteil 7 auf, wobei in dem Mittelteil 7 eine Versteifungssicke 8 ausgebildet ist. Weiterhin weist der Querträger 1 in Randbereichen Flansche 9 auf, wobei die Flansche 9 ebenfalls erfindungsgemäß Bereiche erster Art mit einem tendenziell duktilen Werkstoffgefüge sind. Die Versteifungssicke 8 selber sowie das umliegende Material des Querträgers ist dabei als Bereich zweiter Art mit einem harten Werkstoffgefüge ausgebildet.

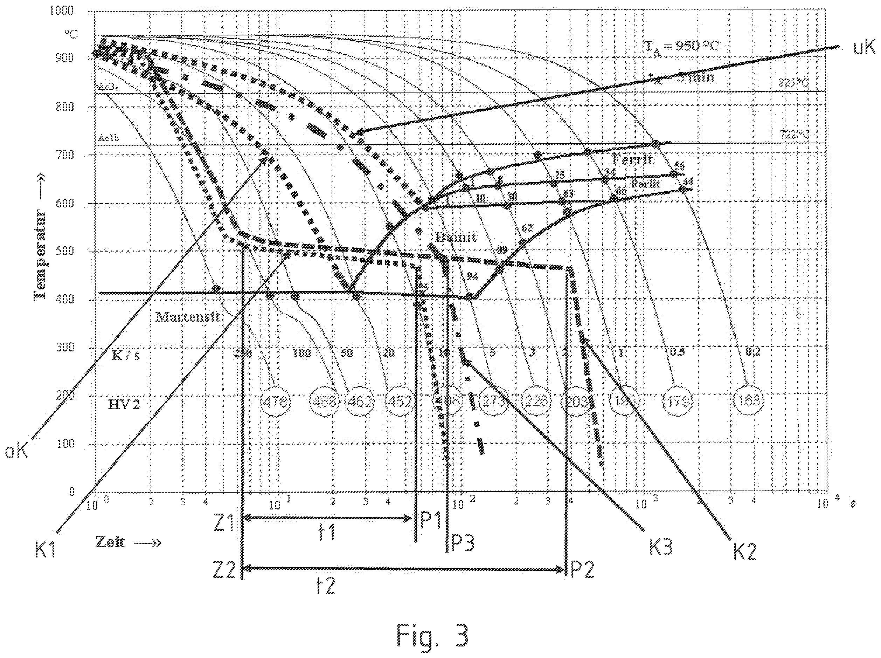

In der Figur 3 ist ein ZTU-Schaubild eines exemplarischen Stahls dargestellt, der den Bereich der vorliegenden Erfindung nicht beschränkt. Es sind die verschiedenen Gefügestrukturen eingezeichnet, die sich bei Abkühlgeschwindigkeiten über die Temperatur bei dem Werkstoff einstellen. Im unteren Bildbereich ist die Martensitbildung gezeigt. Darüber, im mittleren Bildbereich, die Bainitbildung und wiederum darüber die Perlit- bzw. Ferritbildung.

In dem hier gezeigten Ausführungsbeispiel sind drei verschiedene Kurven für verschiedene Abkühlprozesse gezeigt. Kurve K1 zeigt den Temperaturverlauf für einen erfindungsgemäßen ersten Bereich, wobei dieser zunächst auf eine Temperatur über AC3-Temperatur erhitzt ist. Von dieser Temperatur wird auf eine Zwischentemperatur auf ca. 520°C abgekühlt mit einer Abkühlgeschwindigkeit, die in diesem Falle größer ist, als die obere kritische Abkühlgeschwindigkeit oK für die Bainitbildung des hier gezeigten Werkstoffes. Bei Erreichen der Abkühlungstemperatur der Zwischenkühlung von ca. 520°C wird der erste Bereich auf einer Temperatur für den Zeitraum t1 im Wesentlichen isotherm gehalten. Die Temperatur fällt dabei aufgrund von Wärmeabgang in Form von beispielsweise Wärmestrahlung, Konvektion oder aber auch Wärmeleitung von ca. 520°C auf ca. 480°C. Es stellt sich somit beim Zeitpunkt Z1 der Zwischenkühlung ein austenitisches Gefüge ein und zum Zeitpunkt P1, der Beginn des Presshärtens in der ersten Ausführungsvariante, ein bainitisch-austenitisches Mischgefüge.

Im weiteren Verlauf wird bei der ersten Ausführungsvariante vom Zeitpunkt P1 aus derart durch den Presshärtevorgang abgeschreckt, dass das bainitisch-austenitische Mischgefüge im ersten Bereich in ein bainitisch-martensitisches Mischgefüge umgewandelt wird. Parallel hierzu wird der erfindungsgemäß zweite Bereich von einer Temperatur oberhalb von AC3 durch Presshärten abgeschreckt, sodass hier direkt aus einem austenitischen Gefüge ein martensitisches Gefüge entsteht, was hier der Übersichtlichkeit halber jedoch nicht näher dargestellt ist.

Eine zweite Ausführungsvariante des erfindungsgemäßen Verfahrens ist mit dem Abkühlverlauf gemäß Kurve 2 des ersten Bereiches dargestellt. Der Abkühlverlauf der Kurve 2 folgt analog dem Abkühlverlauf der Kurve K1, wobei von einem Zeitpunkt Z2 (gleich Z1) die Abkühltemperatur länger gehalten wird, sodass der Presshärtevorgang zu einem Zeitpunkt P2 beginnt. Folglich ist die Zeitspanne t2 größer als t1. Das Gefüge im ersten Bereich hat sich zur Zeitpunkt P2 vollständig in Bainit umgewandelt und erfährt somit durch die Abkühlgeschwindigkeit nach dem Zeitpunkt P2 keine weitere Gefügeumwandlung mehr.

In einer dritten Ausführungsvariante gemäß der vorliegenden Erfindung, wird eine Abkühlgeschwindigkeit von einer Temperatur oberhalb der AC3-Temperatur gemäß Kurve 3 gewählt, sodass direkt in das bainitische Zwischengefüge beim Abkühlvorgang der Zwischenkühlung umgewandelt wird. Hierbei wurde in dem ersten Bereich ein austenitisches-bainitisches Zwischengefüge eingestellt, so dass bei Einsetzen des Presshärtevorganges zum Zeitpunkt P3 dieses bainitisch-austenitische Mischgefüge in ein bainitisch-martensitisches Mischgefüge im ersten Bereich umgewandelt wird. Bei den Ausführungsvarianten gemäß Kurve 2 und 3 wird jeweils der zweite Bereich, der während der Zwischenkühlung oberhalb der AC3-Temperatur gehalten ist, durch eine Abkühlung während des Presshärtevorganges vom austenitischen Bereich direkt in Martensit umgewandelt. Bei der Ausführungsvariante gemäß Kurve 3 wird die Temperatur erfindungsgemäß immer größer der unteren kritischen Abkühlgeschwindigkeit uK des jeweilig eingesetzten Werkstoffes gewählt.

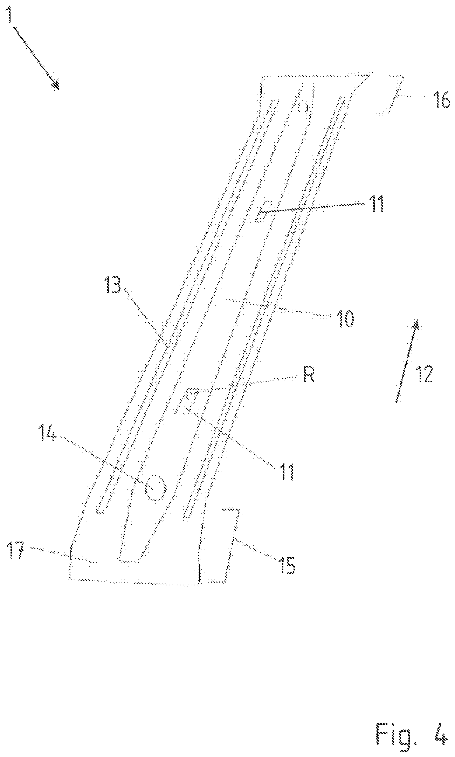

Figur 4 zeigt einen Querträger 1 in einer Ausführungsvariante als Dachquerträger zur Anordnung und Koppelung eines hier nicht näher dargestellten Kraftfahrzeuges bzw. Fahrzeugdaches. Der Dachquerträger weist Ausprägungen 10 und Ausnehmungen 11 sowie parallel zu seiner Längsrichtung 12 ausgerichtete Sicken 13 auf. Die Ausnehmungen 11 sind in ihren Randbereichen R als Bereiche erster Art ausgebildet. Der erfindungsgemäße Dachquerträger weist weiterhin Bereiche erster Art, die punktuell ausgebildet 14 sind, auf. Beispielsweise kann hier ein nicht näher dargestelltes Fahrzeugdach gekoppelt werden. Als bevorzugte Koppelungsverfahren sind hier beispielsweise Nietverfahren oder Punktschweißungen durchführbar. Weiterhin ist der Dachquerträger an seinem vorderen Ende 15 und hinteren Ende 16 jeweils mit Bereichen erster Art ausgebildet, sodass hier ein jeweiliger Anbindungsbereich, beispielsweise in der Anordnung mit einer hier nicht näher dargestellten B-Säule, erfolgen kann. Das vordere Ende 15 und das hintere Ende 16 können dabei beispielsweise in Form eines Fügeflansches 17 ausgebildet sein. Durch die Bereiche erster Art 2 wird hier im Crashfall vermieden, dass der Dachquerträger von der hier nicht näher dargestellten gekoppelten B-Säule ab- bzw. ausreißt. In der Folge stellt sich eine hohe Steifigkeit des Fahrgastraumes aufgrund der sonst im Dachquerträger ausgebildeten Bereiche zweiter ein.

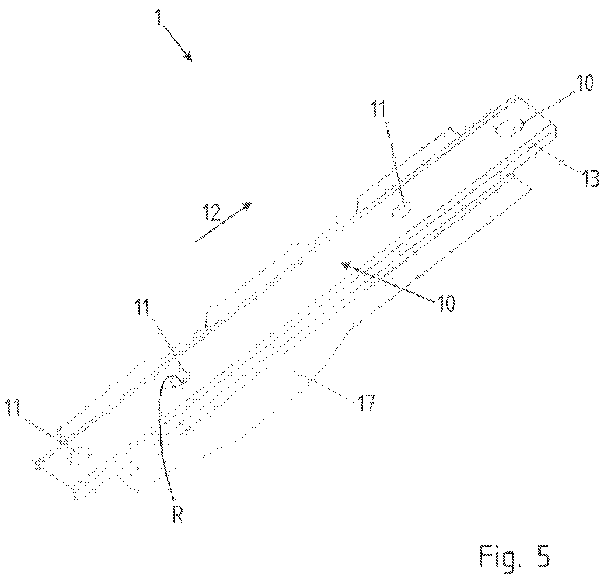

Figur 5 zeigt einen erfindungsgemäßen Querträger 1, ausgebildet als Sitzquerträger. Auch der Sitzquerträger weist Sicken 13, Ausprägungen 10, Ausnehmungen 11 und auch Fügeflansche 17 auf. Bei den Ausnehmungen 11 handelt es sich vorrangig um Durchführungslöcher zur Befestigung von nicht näher dargestellten Sitzschienen. Es können aber auch einzelne Komponenten durch die Ausnehmungen 11 geführt sein. Beispielsweise handelt es sich bei diesen hier nicht näher dargestellten Komponenten um ein Kabelbaum oder aber auch um Aktuatoren zur Verstellung eines hier nicht näher dargestellten Fahrzeugsitzes. Die Randbereiche R der Ausnehmungen 11 sind wiederum als Bereiche erster Art mit einem tendentiell eher duktilen Werkstoffgefüge ausgebildet, wohingegen der Rest des Sitzquerträgers als Bereich zweiter Art mit einem eher harten Werkstoffgefüge ausgebildet ist.

### Bezugszeichen:

- 1 -: Querträger
- 2 -: Bereich erster Art
- 3 -: Bereich zweiter Art
- 4 -: Übergangsbereich
- 5 -: Anbindungsbereich
- 6 -: Crashbox
- 7 -: Mittelteil
- 8 -: Versteifungssicke
- 9 -: Flansch
- 10 -: Aussparung
- 11 -: Ausnehmung
- 12 -: Längsrichtung
- 13 -: Sicke
- 14 -: punktueller Bereich erster Art
- 15 -: vorderes Ende
- 16 -: hinteres Ende
- 17 -: Fügeflansch
- a -: Breite
- R -: Randbereich
- P1 -: Zeitpunkt Start Presshärten
- P2 -: Zeitpunkt Start Presshärten
- P3 -: Zeitpunkt Start Presshärten
- oK -: obere kritische Abkühlgeschwindigkeit
- uK -: untere kritische Abkühlgeschwindigkeit
- t1 -: Haltezeit auf Zwischenkühltemperatur
- t2 -: Haltezeit auf Zwischenkühltemperatur
- Z1 -: Zeitpunkt Zwischenkühlung
- Z2 -: Zeitpunkt Zwischenkühlung
- Z3 -: Zeitpunkt Zwischenkühlung
- K1 -: Kurve 1
- K2 -: Kurve 2
- K3 -: Kurve 3

## Patentansprüche

1. Querträger (1), hergestellt aus einem härtbaren Stahl durch Warmumformen und Presshärten, wobei der Querträger (1) nach dem Presshärten mindestens zwei Bereiche unterschiedlicher Festigkeit aufweist, **dadurch gekennzeichnet, dass** ein Bereich erster Art (2) ein im Wesentlichen bainitisches Gefüge mit weniger als 30% weiteren Gefügebestandteilen aufweist und ein Bereich zweiter Art (3) ein im Wesentlichen martensitisches Gefüge mit weniger als 30% weiteren Gefügebestandteilen aufweist wobei ein Übergangsbereich (4) zwischen dem Bereich erster Art (2) und dem Bereich zweiter Art (3) kleiner als 80 mm ist und der härtbare Stahl ein mikrolegierter Vergütungsstahl ist.

2. Querträger nach Anspruch 1, **dadurch gekennzeichnet, dass** der Übergangsbereich (4) kleiner als 50mm, bevorzugt kleiner als 30mm und insbesondere kleiner als 20mm ist.

3. Querträger nach Anspruch 1 oder 2, **dadurch gekennzeichnet, dass** der Bereich zweiter Art (3) ein martenistisches Gefüge als Hauptgefügebestandteil aufweist, wobei weitere Gefügebestandteile mit weniger als 15% vorhanden sind.

4. Querträger nach Anspruch 3, **dadurch gekennzeichnet, dass** im Bereich zweiter Art (3) Bainit als weiterer Gefügebestandteil vorhanden ist.

5. Querträger nach einem der Ansprüche 1 bis 4, **dadurch gekennzeichnet, dass** der Bereich erster Art (2) als Hauptgefügebestandteil Bainit aufweist, wobei weitere Gefügebestandteile mit weniger als 15% vorhanden sind.

6. Querträger nach einem der Ansprüche 1 bis 5, **dadurch gekennzeichnet, dass** der Bereich erster Art (2) von dem Bereich zweiter Art (3) zumindest teilweise umschlossen ist, vorzugsweise vollständig umschlossen ist.

7. Querträger nach einem der Ansprüche 1 bis 6, **dadurch gekennzeichnet, dass** der Bereich erster Art (2) punktuell (14) ausgebildet ist, mit einem Durchmesser von weniger als 40 mm, bevorzugt weniger als 20 mm und besonders bevorzugt weniger als 10 mm.

8. Querträger nach einem der Ansprüche 1 bis 7, **dadurch gekennzeichnet, dass** der Bereich erster Art (2) als Anbindungsbereich (5) für Crashboxen (6) an dem Querträger (1) ausgebildet ist.

9. Querträger nach einem der Ansprüche 1 bis 8, **dadurch gekennzeichnet, dass** der Bereich erster Art (2) in Bereichen des Querträgers (1) ausgebildet ist, der im Crashfall besonders starken Deformationen unterworfen sind und/oder der durch Deformation Crashenergie abbauen soll.

10. Querträger nach einem der Ansprüche 1 bis 9, **dadurch gekennzeichnet, dass** der Bereich erster Art (2) eine erhöhte Wanddicke gegenüber dem Bereich zweiter Art (3) aufweist.

11. Querträger nach einem der Ansprüche 1 bis 10, **dadurch gekennzeichnet, dass** im Bereich erster Art (2) ein Durchzug herstellbar ist und/oder Abkantungen nach dem Warmformen herstellbar sind.

12. Querträger nach einem der Ansprüche 1 bis 11, **dadurch gekennzeichnet, dass** der Bereich erster Art (2) ein Dehnvermögen A50 zwischen 10% und 30%, vorzugsweise zwischen 12% und 20% hat und insbesondere zwischen 12% und 16%, besonders bevorzugt zwischen 14% und 16%.

13. Querträger nach einem der Ansprüche 1 bis 12, **dadurch gekennzeichnet, dass** der Bereich erster Art (2) eine Zugfestigkeit zwischen 500 und 1000 N/mm² aufweist, vorzugsweise zwischen 550 und 800 N/mm².

14. Querträger nach einem der Ansprüche 1 bis 13, **dadurch gekennzeichnet, dass** die Streckgrenze und/oder Zugfestigkeit im Übergangsbereich (4) mit einem Gradienten von mehr als 100 N/mm², vorzugsweise mehr als 200 N/mm² und insbesondere mehr als 400 N/mm² pro 10 mm abnimmt oder zunimmt.

15. Querträger nach einem der Ansprüche 1 bis 14, **dadurch gekennzeichnet, dass** der Bereich zweiter Art (3) eine Festigkeit von mehr als 1000 N/mm², vorzugsweise mehr als 1200 N/mm² und insbesondere mehr als 1400 N/mm² aufweist.

16. Querträger nach einem der Ansprüche 1 bis 15, **dadurch gekennzeichnet, dass** der Bereich erster Art (2) eine Streckgrenze zwischen 200 und 800 N/mm², bevorzugt zwischen 250 und 600 N/mm², besonders bevorzugt zwischen 250 und 500 N/mm², ganz besonders bevorzugt zwischen 300 und 500 N/mm² aufweist.

17. Querträger nach einem der Ansprüche 1 bis 16, **dadurch gekennzeichnet, dass** zu dessen Herstellung ein Tailor Welded Blank oder ein Tailor Rolled Blank verwendet wird.

18. Verfahren zur Herstellung eines warmumgeformten und pressgehärteten Querträgers nach Anspruch 1, wobei der Querträger mindestens zwei Bereiche unterschiedlicher Härte erhält, **gekennzeichnet durch** folgende Verfahrensmerkmale:
- Bereitstellen einer härtbaren Blechplatine bzw. eines Halbzeugs, welche auf mindestens Austenitisierungstemperatur erwärmt wird,
- Zwischenkühlen eines Bereichs erster Art der Blechplatine bzw. Halbzeug, wobei die Abkühlgeschwindigkeit größer der unteren kritischen Abkühlgeschwindigkeit (uK) des Werkstoffes der Blechplatine bzw. des Halbzeuges gewählt wird, wobei auf eine Temperatur zwischen 600 und 400°C abgekühlt wird,
- Warmformen und Presshärten der Blechplatine bzw. des Halbzeuges zu dem Querträger (1) in einem Presshärtewerkzeug.

19. Verfahren nach Anspruch 18, **dadurch gekennzeichnet, dass** ein Bereich zweiter Art (3) bis zur Zuführung in das Pressenwerkzeug oberhalb der Austenitisierungstemperatur gehalten wird.

20. Verfahren nach Anspruch 18 oder 19, **dadurch gekennzeichnet, dass** die Abkühlgeschwindigkeit beim Zwischenkühlen des Bereiches erster Art (2) so gewählt wird, dass ein bainitisches Gefüge erhalten wird, vorzugsweise wird auf eine Temperatur von 500°C abgekühlt.

21. Verfahren nach einem der Ansprüche 18 bis 20, **dadurch gekennzeichnet, dass** der Bereich erster Art (2) auf der Abkühltemperatur der Zwischenkühlung für eine vorgebbare Zeit gehalten wird, vorzugsweise isotherm.

22. Verfahren nach einem der Ansprüche 18 bis 21, **dadurch gekennzeichnet, dass** der Bereich erster Art (2) in dem Presshärtewerkzeug aus der bainitischen Gefügeumwandlungsstufe abgeschreckt wird, so dass im Bereich erster Art (2) ein Mischgefüge aus Martensit und Bainit eingestellt wird oder ein Mischgefüge aus Martensit, Bainit und Ferrit und/oder Perlit eingestellt wird.

23. Verfahren nach einem der Ansprüche 18 bis 21, **dadurch gekennzeichnet, dass** der Bereich erster Art (2) isotherm gehalten wird, so dass durch das Presshärten ein im Wesentlichen rein bainitisches Gefüge ausgebildet wird.

24. Verfahren nach einem der Ansprüche 18 bis 23, **dadurch gekennzeichnet, dass** die Abkühlgeschwindigkeit der Zwischenkühlung größer der oberen kritischen Abkühlgeschwindigkeit (oK) gewählt wird.

25. Verfahren nach einem der Ansprüche 18 bis 24, **dadurch gekennzeichnet, dass** die Zwischenkühlung des Bereiches erster Art (2) in dem Presshärtewerkzeug durchgeführt wird, vorzugsweise durch in dem Presshärtewerkzeug angeordnete Kühlplatten.

26. Verfahren nach einem der Ansprüche 18 bis 25, **dadurch gekennzeichnet, dass** die Blechplatine kalt zu einem Halbzeug vorgeformt wird und anschließend auf mindestens Austenitisierungstemperatur erwärmt wird.

## Claims

1. Crossmember (1) produced from a hardenable steel by hot working and press hardening, wherein after the press hardening the crossmember (1) comprises at least two regions of different strengths, **characterised in that** a region of a first type (2) has a substantially bainitic structure with less than 30% of further structure constituents and a region of a second type (3) has a substantially martensitic structure with less than 30% of further structure constituents, wherein a transition region (4) between the region of the first type (2) and the region of the second type (3) is smaller than 80 mm and the hardenable steel is a micro-alloyed heat-treatable steel.

2. Crossmember according to claim 1, **characterised in that** the transition region (4) is smaller than 50 mm, preferably smaller than 30 mm and in particular smaller than 20 mm.

3. Crossmember according to claim 1 or 2, **characterised in that** the region of the second type (3) has a martensitic structure as the main structure constituent, wherein further structure constituents are present in an amount less than 15%.

4. Crossmember according to claim 3, **characterised in that** in the region of the second type (3) bainite is present as a further structure constituent.

5. Crossmember according to any one of claims 1 to 4, **characterised in that** the region of the first type (2) comprises bainite as main structure constituent, wherein further structure constituents are present in an amount of less than 15%.

6. Crossmember according to any one of claims 1 to 5, **characterised in that** the region of the first type (2) is at least partially enclosed, preferably fully enclosed, by the region of the second type (3).

7. Crossmember according to any one of claims 1 to 6, **characterised in that** the region of the first type (2) is formed selectively (14), and has a diameter of less than 40 mm, preferably less than 20 mm and particularly preferably less than 10 mm.

8. Crossmember according to any one of claims 1 to 7, **characterised in that** the region of the first type (2) is formed as a connecting region (5) for crash boxes (6) on the crossmember (1).

9. Crossmember according to any one of claims 1 to 8, **characterised in that** the region of the first type (2) is formed in regions of the crossmember (1) that in the event of a crash are subjected to particularly strong deformations and/or should dissipate the crash energy by deformation.

10. Crossmember according to any one of claims 1 to 9, **characterised in that** the region of the first type (2) has an increased wall thickness compared to the region of the second type (3).

11. Crossmember according to any one of claims 1 to 10, **characterised in that** in the region of the first type (2) a passage can be formed and/or edgings can be produced after the heat forming.

12. Crossmember according to any one of claims 1 to 11, **characterised in that** the region of the first type (2) has an extensibility A50 of between 10 and 30%, preferably between 12 and 20% and in particular between 12% and 16%, particularly preferably between 14% and 16%.

13. Crossmember according to any one of claims 1 to 12, **characterised in that** the region of the first type (2) has a tensile strength between 500 and 1000 N/mm², preferably between 550 and 800 N/mm².

14. Crossmember according to any one of claims 1 to 13, **characterised in that** the yield strength and/or tensile strength in the transition region (4) decreases or increases with a gradient of more than 100 N/mm², preferably more than 200 N/mm² and in particular more than 400 N/mm² per 10 mm.

15. Crossmember according to any one of claims 1 to 14, **characterised in that** the region of the second type (3) has a strength of more than 1000 N/mm², preferably more than 1200 N/mm² and in particular more than 1400 N/mm².

16. Crossmember according to any one of claims 1 to 15, **characterised in that** the region of the first type (2) has a yield strength of between 200 and 800 N/mm², preferably between 250 and 600 N/mm², particularly preferably between 250 and 500 N/mm², most particularly preferably between 300 and 500 N/mm².

17. Crossmember according to any one of claims 1 to 16, **characterised in that** a Tailor Welded Blank or a Tailor Rolled Blank is used for the production thereof.

18. Method for producing a hot-worked and press-hardened crossmember according to claim 1, wherein the crossmember contains two regions of different hardness, **characterised by** the following method features:
- Provision of a hardenable sheet metal plate or a semi-finished product, which is heated to at least the austenitising temperature,
- Intermediate cooling of a region of the first type of sheet metal plate or semi-finished product, wherein the cooling rate is greater than the lower critical cooling rate (uK) of the material of the sheet metal plate or of the semi-finished product, wherein it is cooled to a temperature between 600 and 400°C,
- Hot working and press-hardening of the sheet metal plate or semi-finished product to form the crossmember (1) in a press hardening tool.

19. Method according to claim 18, **characterised in that** a region of the second type (3) is maintained above the austenitising temperature before being fed to the press tool.

20. Method according to claim 18 or 19, **characterised in that** the cooling rate in the intermediate cooling of the region of the first type (2) is chosen so that a bainitic structure is obtained, and is preferably cooled to a temperature of 500°C.

21. Method according to any one of claims 18 to 20, **characterised in that** the region of the first type (2) is maintained preferably isothermally for a predeterminable time at the cooling temperature of the intermediate cooling.

22. Method according to any one of claims 18 to 21, **characterised in that** the region of the first type (2) is quenched in the press hardening tool from the bainitic structure conversion stage, so that in the region of the first type (2) a mixed structure of martensite and bainite is established or a mixed structure of martensite, bainite and ferrite and/or perlite is established.

23. Method according to any one of claims 18 to 21, **characterised in that** the region of the first type (2) is maintained isothermally, so that a substantially purely bainitic structure is formed by the press hardening.

24. Method according to any one of claims 18 to 23, **characterised in that** the cooling rate of the intermediate cooling is greater than the upper critical cooling rate (oK).

25. Method according to any one of claims 18 to 24, **characterised in that** the intermediate cooling of the region of the first type (2) is carried out in the press hardening tool, preferably by means of cooling plates arranged in the press hardening tool.

26. Method according to any one of claims 18 to 25, **characterised in that** the sheet metal plate is preformed cold to a semi-finished product and is then heated to at least the austenitising temperature.

## Revendications

1. Traverse (1) fabriquée à partir d'un acier durcissable par déformation à chaud et durcissement à la presse, dans laquelle ladite traverse (1) présente après le durcissement à la presse au moins deux zones de résistance différente, **caractérisée en ce qu'**une zone du premier type (2) présente une structure essentiellement aciculaire avec moins de 30 % d'autres composants structurels et une zone du deuxième type (3) présente une structure essentiellement martensitique avec moins de 30 % d'autres composants structurels, une zone de transition (4) entre la zone de premier type (2) et la zone de deuxième type (3) étant inférieure à 80 mm et l'acier durcissable étant un acier de traitement microallié.

2. Traverse selon la revendication 1, **caractérisée en ce que** la zone de transition (4) est inférieure à 50 mm, préférentiellement inférieure à 30 mm et en particulier inférieure à 20 mm.

3. Traverse selon la revendication 1 ou 2, **caractérisée en ce que** la zone de deuxième type (3) présente une structure martensitique comme composant structurel principal, avec d'autres composants structurels présents pour moins de 15 %.

4. Traverse selon la revendication 3, **caractérisée en ce que**, dans la zone de deuxième type (3), de la baïnite est présente comme autre composant structurel.

5. Traverse selon l'une quelconque des revendications 1 à 4, **caractérisée en ce que** la zone de premier type (2) présente comme composant structurel principal de la baïnite, d'autres composants structurels étant présents pour moins de 15 %.

6. Traverse selon l'une quelconque des revendications 1 à 5, **caractérisée en ce que** la zone de premier type (2) est entourée au moins partiellement, préférentiellement complètement, par la zone de deuxième type (3).

7. Traverse selon l'une quelconque des revendications 1 à 6, **caractérisée en ce que** la zone de premier type (2) est formée en présentant des trous (14) d'un diamètre inférieur à 40 mm, préférentiellement inférieur à 20 mm et plus préférentiellement inférieur à 10 mm.

8. Traverse selon l'une quelconque des revendications 1 à 7, **caractérisée en ce que** la zone de premier type (2) est formée comme zone de liaison (5) pour des absorbeurs de chocs (6) sur la traverse (1).

9. Traverse selon l'une quelconque des revendications 1 à 8, **caractérisée en ce que** la zone de premier type (2) est formée dans des zones de la traverse (1) qui sont particulièrement soumises à de fortes déformations et/ou qui doivent amortir l'énergie des chocs par déformation.

10. Traverse selon l'une quelconque des revendications 1 à 9, **caractérisée en ce que** la zone de premier type (2) présente une épaisseur de paroi supérieure à la zone de deuxième type (3).

11. Traverse selon l'une quelconque des revendications 1 à 10, **caractérisée en ce que**, dans la zone de premier type (2), un passage peut être créé et/ou des chanfreins peuvent être créés après la déformation à chaud.

12. Traverse selon l'une quelconque des revendications 1 à 11, **caractérisée en ce que** la zone de premier type (2) a une extensibilité A50 entre 10 % et 30 %, préférentiellement entre 12 % et 20 % et en particulier entre 12 % et 16 %, plus préférentiellement entre 14 % et 16 %.

13. Traverse selon l'une quelconque des revendications 1 à 12, **caractérisée en ce que** la zone de premier type (2) présente une résistance à la traction entre 500 et 1000 N/mm², préférentiellement entre 550 et 800 N/mm².

14. Traverse selon l'une quelconque des revendications 1 à 13, **caractérisée en ce que** la limite d'élasticité et/ou la résistance à la traction dans la zone de transition (4) diminue ou augmente avec un gradient supérieur à 100 N/mm², préférentiellement supérieur à 200 N/mm² et en particulier supérieur à 400 N/mm² tous les 10 mm.

15. Traverse selon l'une quelconque des revendications 1 à 14, **caractérisée en ce que** la zone de deuxième type (3) présente une résistance supérieure à 1000 N/mm², préférentiellement supérieure à 1200 N/mm² et en particulier supérieure à 1400 N/mm².

16. Traverse selon l'une quelconque des revendications 1 à 15, **caractérisée en ce que** la zone de premier type (2) présente une limite d'élasticité entre 200 et 800 N/mm², préférentiellement entre 250 et 600 N/mm², plus préférentiellement entre 250 et 500 N/mm² et le plus préférentiellement entre 300 et 500 N/mm².

17. Traverse selon l'une quelconque des revendications 1 à 16, **caractérisée en ce que**, pour sa fabrication, un flan soudé sur mesure ou un flan laminé sur mesure est utilisé.

18. Procédé pour la fabrication d'une traverse déformée à chaud et durcie à la presse selon la revendication 1, dans lequel ladite traverse présente au moins deux zones de résistance différente, **caractérisée par** les caractéristiques suivantes :
- fourniture d'une platine en tôle durcissable ou d'une ébauche qui est chauffée au moins à la température d'austénitisation,
- refroidissement intermédiaire d'une zone de premier type de la platine en tôle ou de l'ébauche, la vitesse de refroidissement étant choisie supérieure à la vitesse de refroidissement inférieure critique (uK) du matériau de la platine en tôle ou de l'ébauche, jusqu'à une température entre 600 et 400°C,
- formation à chaud et durcissement à la presse de la platine en tôle ou de l'ébauche en la traverse (1) dans un outil de durcissement à la presse.

19. Procédé selon la revendication 18, **caractérisé en ce qu'**une zone de deuxième type (3) est maintenue, jusqu'à son introduction dans l'outil de presse, au-dessus de la température d'austénitisation.

20. Procédé selon la revendication 18 ou 19, **caractérisé en ce que** la vitesse de refroidissement, lors du refroidissement intermédiaire de la zone de premier type (2), est choisie de manière à ce que la structure baïnitique soit préservée, préférentiellement avec un refroidissement à une température de 500°C.

21. Procédé selon l'une quelconque des revendications 18 à 20, **caractérisé en ce que** la zone de premier type (2) est maintenue à la température de refroidissement du refroidissement intermédiaire pendant un temps donné, préférentiellement isotherme.

22. Procédé selon l'une quelconque des revendications 18 à 21, **caractérisé en ce que** la zone de premier type (2) est trempée dans l'outil de durcissement à la presse à l'issue de l'étape du changement de structure baïnitique, de façon à ce que, dans la zone de premier type (2), une structure mixte de martensite et de baïnite soit réglée ou une structure mixte de martensite, baïnite et ferrite et/ou perlite soit réglée.

23. Procédé selon l'une quelconque des revendications 18 à 21, **caractérisé en ce que** la zone de premier type (2) est maintenue isotherme, de façon à ce qu'une structure purement baïnitique soit formée par le durcissement à la presse.

24. Procédé selon l'une quelconque des revendications 18 à 23, **caractérisé en ce que** la vitesse de refroidissement du refroidissement intermédiaire est choisie supérieure à la vitesse de refroidissement supérieure critique (oK).

25. Procédé selon l'une quelconque des revendications 18 à 24, **caractérisé en ce que** le refroidissement intermédiaire de la zone de premier type (2) est effectué dans l'outil de durcissement à la presse, préférentiellement par des plaques de refroidissement disposées dans l'outil de durcissement à la presse.

26. Procédé selon l'une quelconque des revendications 18 à 25, **caractérisé en ce que** la platine de tôle est préformée à froid en une ébauche et ensuite chauffée au moins à la température d'austénitisation.
